# FASCICULE DE BREVET EUROPEEN

(11) **EP 4 038 716 B1**
(45) Date de publication et mention de la délivrance du brevet: **23.08.2023**
(21) Numéro de dépôt: 20772089.7
(22) Date de dépôt: 22.09.2020
(51) Int. Cl.: H02J 7/00, B64F 1/36, H02J 9/04

(54) **CHARGEUR ELECTRIQUE POUR EQUIPEMENT DE MAINTENANCE AERONAUTIQUE**
ELEKTRISCHES LADEGERÄT FÜR AERONAUTISCHE WARTUNGSEINRICHTUNG
ELECTRIC CHARGER FOR AERONAUTICAL MAINTENANCE EQUIPMENT

(30) Priorité: 30.09.2019 FR 1910801
(43) Date de publication de la demande: 10.08.2022
(73) Titulaire: Guinault SA, 45590 Saint-Cyr-en-Val (FR)
(72) Inventeur: QARISH, Issa, 45590 SAINT CYR EN VAL (FR); BERTHELOT, Jérémy, 45590 SAINT CYR EN VAL (FR); CLERMONT, Lionel, 45590 SAINT CYR EN VAL (FR)
(74) Mandataire: Argyma
(86) Numéro de dépôt international: PCT/EP2020/076447
(87) Numéro de publication internationale: WO 2021/063752

(56) Documents cités:
- EP-A1- 3 232 533
- WO-A1-2005/119877
- WO-A1-2015/088612
- WO-A2-2019/182643
- US-A1- 2014 210 399
- US-A1- 2015 380 955

## Description

### [Domaine technique]

L'invention concerne la charge rapide à forte puissance des équipements munis de batterie de stockage d'énergie électrique dans une zone aéronautique et plus particulièrement un chargeur électrique pour équipement de maintenance aéronautique ainsi qu'un équipement de maintenance aéronautique comprenant un tel chargeur. L'invention vise notamment à permettre une recharge rapide à forte puissance d'une batterie d'équipement de maintenance aéronautique sans modifier l'infrastructure existante de la zone aéronautique.

### [Etat de la technique antérieure]

Dans une zone aéroportuaire, il est connu d'utiliser une unité de puissance au sol à batterie (appelée « Battery Ground Power Unit » ou Battery GPU) afin d'alimenter un aéronef en énergie électrique, notamment lors des opérations de maintenance.

De manière connue, une telle unité comprend, connectés en série et dans cet ordre : un connecteur électrique d'entrée, un module de charge embarqué, une batterie, un onduleur et un connecteur électrique de sortie.

Le module de charge embarqué, appelé « On Board Charger » ou OBC en langue anglaise, permet de fournir à la batterie une tension continue afin de la recharger en énergie électrique. Cette tension continue est obtenue en connectant, via le connecteur électrique d'entrée, le module de charge embarqué à un réseau électrique domestique fournissant une tension alternative comprise entre 200 et 400 V à une fréquence comprise entre 45 et 65 Hz selon que le câblage est de type monophasé ou de type triphasé.

Afin d'alimenter électriquement l'aéronef, l'unité de puissance au sol est déplacée jusqu'à l'aéronef et connectée audit aéronef via le connecteur électrique de sortie et un câble électrique. L'énergie stockée dans la batterie est alors délivrée sous la forme d'une tension continue à l'onduleur qui la transforme en une tension alternative dont la fréquence est identique à la fréquence de la tension alternative du réseau électrique de l'aéronef. Un exemple est EP 3232533.

Lorsque le niveau d'énergie électrique de la batterie est faible, il est nécessaire de raccorder l'unité de puissance au sol au réseau électrique domestique 50 Hz ou 60 Hz pour recharger ladite batterie. Or, dans certaines zones aéroportuaires, les points de raccordement au réseau électrique domestique peuvent être éloignés des points de stationnement des aéronefs, ce qui nécessite alors de devoir déplacer l'unité de puissance au sol jusqu'au point de raccordement disponible le plus proche pour recharger la batterie. De plus, dans certaines zones aéroportuaires, les points de raccordement au réseau électrique domestique peuvent être indisponibles ou ne pas être en nombre suffisant, notamment lorsque plusieurs unités de puissance au sol à batterie doivent être rechargées simultanément, ce qui présente un inconvénient important car les aéronefs ont besoin d'être rapidement alimentés électriquement lors d'une escale, en particulier lors d'une courte escale.

Par ailleurs, certains équipements électriques possédant des batteries dont la capacité est élevée, par exemple de l'ordre de 200 à 300 kWh, ne peuvent pas être rechargés rapidement à partir de la tension fournie par un réseau électrique domestique standard dont la fréquence est comprise entre 45 Hz et 65 Hz car le réseau électrique domestique ne fournit pas toujours le niveau d'ampérage requis pour atteindre la puissance nécessaire pour une charge rapide.

Il existe donc le besoin d'une solution fiable et efficace qui permette de remédier au moins en partie à ces inconvénients.

### [Exposé de l'invention]

A cette fin, l'invention définie dans les revendications indépendantes 1, 11, 13 et 14 a pour objet un chargeur pour équipement de maintenance aéronautique, ledit chargeur comprenant :
- au moins un connecteur électrique d'entrée dit « haute-fréquence » comprenant une pluralité de broches d'alimentation apte à recevoir une tension alternative triphasée délivrée par une source d'alimentation externe à une fréquence de l'ordre de 400 Hz, et deux broches de détection,
- un module de charge dit « haute-fréquence », relié audit au moins un connecteur électrique d'entrée haute-fréquence et destiné à être relié à un module de stockage d'énergie électrique dudit équipement de maintenance aéronautique, ledit module de charge haute-fréquence étant apte à convertir la tension alternative reçue sur la pluralité de broches d'alimentation du connecteur électrique d'entrée haute-fréquence en une tension continue permettant de charger ledit module de stockage,
- un module de contrôle apte à générer une tension de détection entre les broches de détection du connecteur électrique d'entrée haute-fréquence permettant à la source d'alimentation externe, lorsqu'elle détecte ladite tension de détection, d'autoriser la fourniture de la tension alternative à la pluralité de broches d'alimentation du connecteur électrique d'entrée haute-fréquence.

Le chargeur est destiné à être embarqué, c'est-à-dire monté, dans un équipement de maintenance aéronautique. Par les termes « équipement de maintenance aéronautique », on entend un équipement mobile ou fixe comportant un module de stockage d'énergie électrique, par exemple de type batterie, et qui est présent dans une zone aéronautique pour la maintenance d'un aéronef. Par « maintenance », on entend un équipement permettant de réaliser des opérations permettant d'assister, de servir, de maintenir ou de préparer un aéronef dans le but de son décollage, telles que par exemple être alimenté en énergie électrique, être climatisé, être ravitaillé en carburant, être dégivré, être poussé, etc. Un tel équipement de maintenance aéronautique peut par exemple être une unité de puissance au sol à batterie (Battery Ground Power Unit ou Battery GPU), un climatiseur (Air Conditioning Unit ou ACU) à batterie, un tracteur de type push-back à batterie, une plateforme élévatrice à batterie, un escalier mobile à batterie, un compresseur de démarrage à air à batterie, etc. Par les termes « zone aéronautique », on entend une zone de maintenance d'aéronefs telle que par exemple une zone aéroportuaire, une zone de fabrication d'aéronefs, une zone de maintenance d'aéronefs ou toute zone dans laquelle sont en particulier utilisés des équipements à batterie pouvant être rechargés à partir d'une tension alternative 400 Hz.

Le chargeur selon l'invention permet de charger la batterie d'un équipement de maintenance aéronautique à partir d'une source d'alimentation électrique pouvant délivrer une tension alternative à une fréquence de l'ordre de 400 Hz. Les sources pouvant délivrer une tension alternative, par exemple de 200 V entre phases à 400 Hz, sont courantes dans les zones aéronautiques. Ce sont par exemple les groupes électrogènes, les unités de puissance au sol (Ground Power Unit ou GPU), les tracteurs de poussée (appelé « tracteur push-back » par l'homme du métier) équipés de générateurs de puissance électrique embarqués, les convertisseurs alternatif-alternatif 50-60 Hz / 400 Hz alimentant les avions, etc. De telles sources d'alimentation étant courantes et multiples et généralement de forte puissance (supérieure à 90 kW), il est ainsi aisé et rapide de recharger le module de stockage de l'équipement de maintenance aéronautique.

Selon une caractéristique de l'invention, la géométrie des broches d'alimentation et des broches de détection du connecteur électrique d'entrée haute-fréquence impose, lors de la connexion de la source d'alimentation externe sur le connecteur électrique d'entrée haute-fréquence, la connexion complète des broches d'alimentation dans un premier temps puis la connexion des broches de détection dans un second temps, la tension alternative à 400 Hz étant délivrée seulement une fois que la tension de détection a été détectée entre les deux broches de détection par la source d'alimentation électrique externe. Ce principe empêche la présence d'une tension et donc d'un arc électrique avant la connexion complète des phases du connecteur électrique d'entrée haute-fréquence, un tel arc pouvant être dangereux pour l'opérateur réalisant le branchement. Autrement dit, la tension de détection générée par le module de contrôle permet à la source d'alimentation de détecter électriquement le chargeur, c'est à dire de détecter que le branchement est entièrement réalisé, afin d'éviter la formation d'un arc électrique entre les broches d'alimentation du connecteur électrique d'entrée haute-fréquence et la source d'alimentation externe.

De préférence, le connecteur électrique d'entrée haute-fréquence est conforme au standard international ISO461 ou similaire (connecteur dit « avion ») et est donc compatible avec les sources d'alimentation 400 Hz des zones aéronautiques, notamment pour des puissances de l'ordre de 90 kVA ou des intensités de courant de l'ordre de 260 A.

De préférence, le connecteur électrique d'entrée haute-fréquence comprend quatre broches d'alimentation : trois phases et un neutre.

De préférence, les deux broches de détection sont conformes au standard international ISO461.

De manière avantageuse, le module de contrôle est apte à recevoir une consigne d'un module de surveillance (appelé BMS pour « Battery System Management ») du module de stockage et à réguler la tension continue fournie par le module de charge haute-fréquence en fonction de ladite consigne.

De manière avantageuse, le module de contrôle est connecté au module de surveillance sur un lien de communication de type bus CAN (Controller Area Network).

Dans une forme de réalisation, le chargeur comprend une pluralité de connecteurs électriques d'entrée haute-fréquence, par exemple deux ou trois connecteurs électriques d'entrée haute-fréquence, afin d'augmenter la puissance de charge du chargeur. Par exemple, si une charge est possible avec une puissance de 90 kVA sur un connecteur électrique d'entrée haute-fréquence alors deux connecteurs électriques d'entrée haute-fréquence permettront de réaliser une charge à une puissance de 180 kVA et donc de charger le module de stockage plus rapidement.

Selon un aspect de l'invention, le module de charge haute-fréquence comprend un redresseur de tension, qui peut être passif ou actif, apte à convertir la tension alternative reçue en entrée du module de charge haute-fréquence en une tension continue et un convertisseur élévateur, apte à transformer la tension continue fournie par le redresseur en une tension continue de valeur plus élevée.

De manière préférée, le convertisseur élévateur comprend un étage de conversion de tension continue en tension alternative, un étage de conversion de tension alternative en tension continue et un transformateur haute-fréquence connecté entre l'étage de conversion de tension continue en tension alternative et l'étage de conversion de tension alternative en tension continue. Le transformateur haute-fréquence permet avantageusement d'adapter la tension continue de sortie du module de charge haute-fréquence à la valeur souhaitée pour recharger le module de stockage et d'isoler galvaniquement le module de charge haute-fréquence du module de stockage lorsque ces derniers sont connectés entre eux électriquement.

Dans une forme de réalisation, le chargeur comprend :
- au moins un connecteur électrique d'entrée dit « basse-fréquence » distinct de l'au moins un connecteur électrique d'entrée haute-fréquence et apte à recevoir une tension alternative monophasée ou triphasée délivrée par une source d'alimentation externe à une fréquence comprise entre 45 et 65 Hz,
- un module de charge dit « basse-fréquence », relié d'une part audit au moins un connecteur électrique d'entrée basse-fréquence et destiné à être relié au module de stockage, ledit module de charge basse-fréquence étant apte à convertir la tension alternative reçue sur l'au moins un connecteur électrique d'entrée basse-fréquence en une tension continue permettant de charger le module de stockage.

De préférence, l'au moins un connecteur électrique d'entrée basse-fréquence est apte à recevoir une tension alternative monophasée ou triphasée délivrée par une source d'alimentation externe à une fréquence de l'ordre de 50 ou de l'ordre de 60 Hz.

La présence d'au moins un connecteur électrique d'entrée basse-fréquence et d'au moins un connecteur électrique d'entrée haute-fréquence permet l'utilisation de sources d'alimentation externes fonctionnant aussi bien à des fréquences de 50 ou 60 Hz (par exemple un réseau électrique domestique) qu'à des fréquences de 400 Hz, fréquence à laquelle fonctionne la plupart des sources d'alimentation disponibles dans les zones les aéronautiques.

Avantageusement, le chargeur comprend une pluralité de connecteurs électriques d'entrée basse-fréquence, par exemple deux ou trois.

Dans une forme de réalisation, le module de charge basse-fréquence et le module de charge haute-fréquence sont mis en oeuvre par deux entités physiques distinctes, par exemple deux circuits électroniques différents avec leurs propres composants permettant pour l'un de convertir en tension continue une tension alternative en 50 ou en 60 Hz et pour l'autre de convertir en tension continue une tension alternative en 400 Hz.

Dans ce cas, avantageusement, le module de contrôle est apte à détecter la connexion d'une source d'alimentation externe sur l'au moins un connecteur électrique d'entrée haute-fréquence ou l'au moins un connecteur électrique d'entrée basse-fréquence et à connecter électriquement l'au moins un connecteur électrique d'entrée haute-fréquence au module de charge haute-fréquence lorsque la connexion a été détectée sur l'au moins connecteur électrique d'entrée haute-fréquence ou l'au moins connecteur électrique d'entrée basse-fréquence au module de charge basse-fréquence lorsque la connexion a été détectée sur l'au moins un connecteur électrique d'entrée basse-fréquence.

Dans une forme de réalisation, le module de charge basse-fréquence et le module de charge haute-fréquence sont mis en oeuvre par une même entité physique dans un unique module de charge basse-fréquence ou haute-fréquence, par exemple un unique circuit électronique avec des composants communs permettant de convertir en tension continue aussi bien une tension alternative en 50 ou en 60 Hz qu'une tension alternative en 400 Hz.

Dans ce cas, avantageusement, le module de contrôle est apte à détecter une connexion sur l'au moins un connecteur électrique d'entrée haute-fréquence ou sur l'au moins un connecteur électrique d'entrée basse-fréquence et à adapter le fonctionnement du module de charge basse-fréquence ou haute-fréquence en fonction de la fréquence de la tension alternative fournie sur le connecteur électrique d'entrée détecté, c'est-à-dire notamment à commander des semi-conducteurs ou la commutation de transistors de puissance afin de réaliser le conversion de la tension alternative selon que sa fréquence est de 50-60 Hz ou de 400 Hz.

Par exemple, le module de contrôle peut-être apte à connecter respectivement le connecteur électrique d'entrée haute-fréquence au module de charge haute-fréquence via un contacteur, par exemple triphasé, ou le connecteur électrique d'entrée basse-fréquence au module de charge basse-fréquence via un contacteur, par exemple triphasé, lorsqu'une source d'alimentation externe est connectée respectivement sur le connecteur électrique d'entrée haute-fréquence ou sur le connecteur électrique d'entrée basse-fréquence.

De manière avantageuse, le module de contrôle est apte à déterminer ou à recevoir une information sur la puissance de charge de la source d'alimentation externe et à adapter l'intensité du courant de charge du module de stockage en fonction de ladite information de puissance de charge. Une telle fonctionnalité permet de déterminer la limite d'intensité du courant de charge du module de stockage en fonction de la source d'alimentation électrique externe. L'adaptation de l'intensité du courant de charge peut se faire manuellement, par exemple via une interface homme-machine, ou automatiquement en mode pas à pas.

L'invention concerne également un équipement de maintenance aéronautique destiné à être utilisé dans une zone aéronautique, ledit équipement de maintenance aéronautique comprenant :
- un chargeur tel que présenté précédemment,
- un module de stockage, connecté audit chargeur, apte à stocker de l'énergie électrique lorsque ledit module de stockage est alimenté par une tension continue délivrée par ledit chargeur.

L'équipement de maintenance aéronautique peut être mobile ou fixe. L'équipement de maintenance aéronautique peut être une unité de puissance au sol à batterie (Battery Ground Power Unit ou Battery GPU), un tracteur push-back à batterie, un convertisseur de tension alternative 50 ou 60 Hz en tension alternative 400 Hz à batterie, etc.

Dans une forme de réalisation, notamment de type unité de puissance au sol, l'équipement de maintenance aéronautique comprend en outre un onduleur, connecté au module de stockage et apte à convertir une tension continue fournie par le module de stockage en une tension alternative 400 Hz adaptée pour alimenter électriquement un aéronef, et un connecteur électrique de sortie relié audit onduleur et apte à être relié à un aéronef via un câble électrique.

Avantageusement, l'équipement de maintenance aéronautique comprend, entre l'onduleur et le connecteur électrique de sortie, un contacteur apte à connecter ou non l'onduleur au connecteur électrique de sortie.

De manière avantageuse encore, l'équipement de maintenance aéronautique peut comprendre un module de génération d'électricité (appelé « Range Extender ») connecté au module de stockage, par exemple via un contacteur commandé par le module de contrôle, apte à produire une tension continue ou alternative haute-fréquence ou basse-fréquence à partir d'un carburant ou d'une pile à combustible afin de recharger le module de stockage.

De préférence, le module de génération d'électricité est connecté au module de stockage via le module de contrôle et le module de contrôle est apte à connecter au module de stockage, à un instant donné, l'un et seulement l'un parmi le module de charge haute-fréquence, le module de génération d'électricité ou, le cas échéant, le module de charge basse-fréquence.

L'invention concerne aussi un ensemble d'équipements de maintenance aéronautique comprenant un premier équipement de maintenance aéronautique, tel que présenté précédemment, et un deuxième équipement de maintenance aéronautique, connecté électriquement audit premier équipement de maintenance aéronautique et constituant une source d'alimentation externe apte à délivrer une tension alternative monophasée 50/60 Hz ou triphasée 50/60 Hz ou triphasée 400 Hz.

L'invention concerne aussi un système comprenant un équipement de maintenance aéronautique tel que présenté précédemment et une source d'alimentation externe, connectée électriquement audit équipement de maintenance aéronautique, ladite source d'alimentation externe étant apte à délivrer une tension alternative monophasée 50/60 Hz ou triphasée 50/60 Hz ou triphasée 400 Hz, afin de charger le module de stockage de l'équipement de maintenance aéronautique via le chargeur dudit équipement de maintenance aéronautique.

Selon un aspect de l'invention, la source d'alimentation externe comprend un moteur thermique, un moteur électrique ou une pile à combustible. La source d'alimentation externe peut par exemple être un groupe électrogène, une alimentation électrique sous avion fixe ou mobile en 50, 60 ou 400 Hz, un tracteur push-back équipé d'un groupe électrogène haute-fréquence ou basse-fréquence. Notamment, le tracteur push-back peut apporter de l'énergie s'il est équipé d'une unité de puissance embarquée, ou d'un groupe électrogène pouvant par exemple délivrer une tension comprise entre 45 et 65 Hz.

L'invention concerne aussi système aéronautique comprenant un équipement de maintenance aéronautique tel que présenté précédemment, de type unité de puissance au sol à batterie (Battery GPU) et un aéronef, ledit équipement de maintenance aéronautique étant électriquement connecté audit aéronef.

L'invention concerne également un procédé de charge d'un module de stockage d'énergie électrique d'un équipement de maintenance aéronautique tel que présenté précédemment par une source d'alimentation externe apte à délivrer une tension alternative triphasée délivrée à une fréquence de l'ordre de 400 Hz, ledit procédé comprenant les étapes de :
- connexion électrique de la source d'alimentation externe à l'au moins un connecteur électrique d'entrée haute-fréquence du chargeur de l'équipement de maintenance aéronautique de sorte à délivrer une tension alternative triphasée à une fréquence de l'ordre de 400 Hz,
- conversion, par le module de charge haute-fréquence du chargeur de l'équipement de maintenance aéronautique, de ladite tension alternative en une tension continue,
- charge du module de stockage de l'équipement de maintenance aéronautique à partir de ladite tension continue.

De préférence, le procédé comprend, lors de l'étape de connexion électrique de la source d'alimentation externe à l'au moins un connecteur électrique d'entrée haute-fréquence, la détection préalable par la source d'alimentation externe de la tension de détection générée par le module de contrôle suivie de l'alimentation en tension alternative du connecteur électrique d'entrée haute-fréquence par la source d'alimentation externe.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig. 1] : la figure 1 illustre schématiquement une forme de réalisation de l'équipement de maintenance aéronautique selon l'invention.
[Fig. 2] : la figure 2 illustre schématiquement une première forme de réalisation du chargeur selon l'invention.
[Fig. 3] : la figure 3 illustre schématiquement une deuxième forme de réalisation du chargeur selon l'invention dans laquelle le module de charge haute-fréquence et le module de charge basse-fréquence sont deux entités physiques distinctes.
[Fig. 4] : la figure 4 illustre schématiquement la deuxième forme de réalisation du chargeur selon l'invention dans laquelle le module de charge haute-fréquence et le module de charge basse-fréquence sont mis en oeuvre par une même et unique entité physique.
[Fig. 5] : la figure 5 illustre schématiquement un exemple avantageux de convertisseur élévateur d'un module de charge haute-fréquence du chargeur des figures 2 à 4.
[Fig. 6] : la figure 6 illustre schématiquement un exemple de mise en oeuvre de l'invention dans lequel l'équipement de maintenance aéronautique est une unité de puissance au sol.

### [Description des modes de réalisation]

Le chargeur selon l'invention est destiné à être embarqué dans un équipement de maintenance aéronautique d'une zone aéronautique telle que, par exemple, une zone aéroportuaire, un hangar de fabrication ou de maintenance d'aéronef, une base aérienne civile ou militaire, etc. Un tel équipement de maintenance aéronautique peut être mobile (chariot, tracteur,...) ou bien fixe, c'est-à-dire monté au niveau d'un point de stationnement d'un aéronef, par exemple dans le sol ou dans un local technique, dans un boîtier ou dans une armoire. L'équipement de maintenance aéronautique comprend un module de stockage d'énergie électrique qu'il est nécessaire de recharger lorsque son niveau d'énergie est bas. L'équipement de maintenance aéronautique peut par exemple être une unité de puissance au sol à batterie (Battery Ground Power Unit ou GPU), un tracteur push-back à batterie ou tout autre équipement à batterie électrique nécessitant une recharge. Le module de stockage d'énergie électrique de l'équipement de maintenance aéronautique est apte à être rechargé à partir d'une source d'alimentation externe délivrant une tension alternative de fréquence 400 Hz, voire optionnellement de 50 ou 60 Hz, de telles sources d'alimentation électrique étant fréquentes dans les zones aéronautiques et notamment dans les aéroports.

### Equipement aéronautique 1

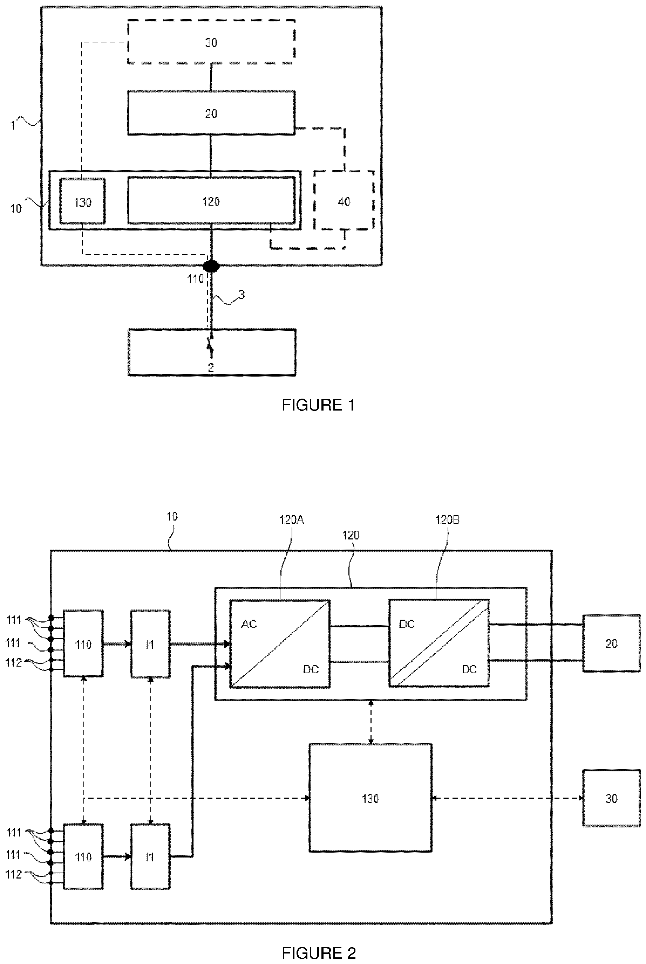

On a représenté à la figure 1 une forme de réalisation de l'équipement de maintenance aéronautique 1 selon l'invention. L'équipement de maintenance aéronautique 1 comprend un chargeur 10 selon l'invention et un module de stockage 20 connecté audit chargeur 10. Sur la figure 1, l'équipement de maintenance aéronautique 1 est relié électriquement à une source d'alimentation externe 2 permettant la charge électrique dudit module de stockage 20 via ledit chargeur 10.

Le module de stockage 20 est électriquement rechargeable afin de stocker de l'énergie électrique qu'il peut ensuite restituer. Plus précisément, en mode de charge, le module de stockage 20 est apte à stocker de l'énergie électrique lorsque ledit module de stockage 20 est alimenté en entrée par une tension continue fournie par la source d'alimentation externe 2 via le chargeur 10. En mode de décharge, le module de stockage 20 est apte à délivrer en sortie une tension de sortie continue afin d'alimenter une entité interne ou externe à l'équipement de maintenance aéronautique 1. Le module de stockage 20 peut se présenter notamment sous la forme d'une batterie électrique ou d'une pluralité de batteries électrique, par exemple de type lithium-ions, de manière connue en soi.

La figure 2 illustre schématiquement une première forme de réalisation du chargeur 10 selon l'invention.

### Chargeur 10

Le chargeur 10 comprend au moins un connecteur électrique d'entrée dit « haute-fréquence » 110, un module de charge dit « haute-fréquence » 120 et une module de contrôle 130. Dans les exemples des figures 2 à 4, le chargeur 10 comporte deux connecteurs électriques d'entrée haute-fréquence 110 mais il va de soi que, dans d'autres formes de réalisation, le chargeur 10 pourrait comprendre un seul connecteur électrique d'entrée haute-fréquence 110 ou plus de deux connecteurs électriques d'entrée haute-fréquence 110.

### Connecteur électrique d'entrée haute-fréquence 110

Le connecteur électrique d'entrée haute-fréquence 110 permet de connecter l'équipement de maintenance aéronautique 1 à une source d'alimentation externe 2 électrique (non représentée sur les figures 2 à 4 par souci de clarté) délivrant une tension alternative haute-fréquence à une fréquence de 400 Hz via un câble électrique 3 (figure 1). La source d'alimentation externe 2 peut être mobile ou fixe et par exemple être un générateur d'électricité fonctionnant à partir de carburant (gazole, essence, bioéthanol, etc.) ou d'une pile à combustible, un tracteur pousseur (push-back) équipé d'un générateur électrique haute-fréquence, un réseau électrique ou tout autre équipement pouvant délivrer une tension alternative à une fréquence de 400 Hz, en particulier les équipements utilisés couramment dans les zones aéronautiques pouvant délivrer une tension de l'ordre de 200 V entre les phases et de fréquence 400 Hz.

Le connecteur électrique d'entrée haute-fréquence 110 comprend des broches d'alimentation 111 aptes à recevoir une tension alternative triphasée délivrée par la source d'alimentation externe 2 à une fréquence de 400 Hz, et deux broches de détection 112. Dans le cas d'une tension alternative triphasée, les broches d'alimentation 111 comprennent trois broches d'alimentation de type phase et une broche d'alimentation de type neutre. La géométrie du connecteur électrique d'entrée haute-fréquence 110 est telle que, lors du branchement de la source d'alimentation externe 2, il est nécessaire d'enfoncer complètement les connecteurs de la prise de la source d'alimentation externe 2 dans les broches d'alimentation 111 du connecteur électrique d'entrée haute-fréquence 110 pour qu'une tension, par exemple de 28 V, soit générée entre les broches de détection 112. La source d'alimentation externe 2 génère la tension alternative uniquement lorsqu'elle détecte une tension entre les broches de détection 112, évitant ainsi tout arc électrique lors du branchement. De préférence, les connecteurs électriques d'entrée haute-fréquence 110 sont conformes au standard international ISO461.

### Module de charge haute-fréquence 120

Le module de charge haute-fréquence 120 est relié, d'une part, aux connecteurs électriques d'entrée haute-fréquence 110 et, d'autre part, au module de stockage 20. Le module de charge haute-fréquence 120 est apte à convertir la tension alternative reçue sur les broches d'alimentation 111 du connecteur électrique d'entrée haute-fréquence 110 en une tension continue, de préférence régulée, permettant de recharger ledit module de stockage 20. Plus précisément, le module de charge haute-fréquence 120 est apte à convertir une tension alternative de fréquence 400 Hz en une tension continue par exemple comprise entre 300 Vdc et 900 Vdc en cas d'alimentation triphasée selon la tension du module de stockage 20, afin de fournir de l'énergie électrique au module de stockage 20 pour le recharger. De manière avantageuse, le module de charge haute-fréquence 120 est apte à réguler la tension continue qu'il délivre à partir d'une consigne reçue d'un module de gestion du module de stockage 20, comme cela sera décrit ci-après.

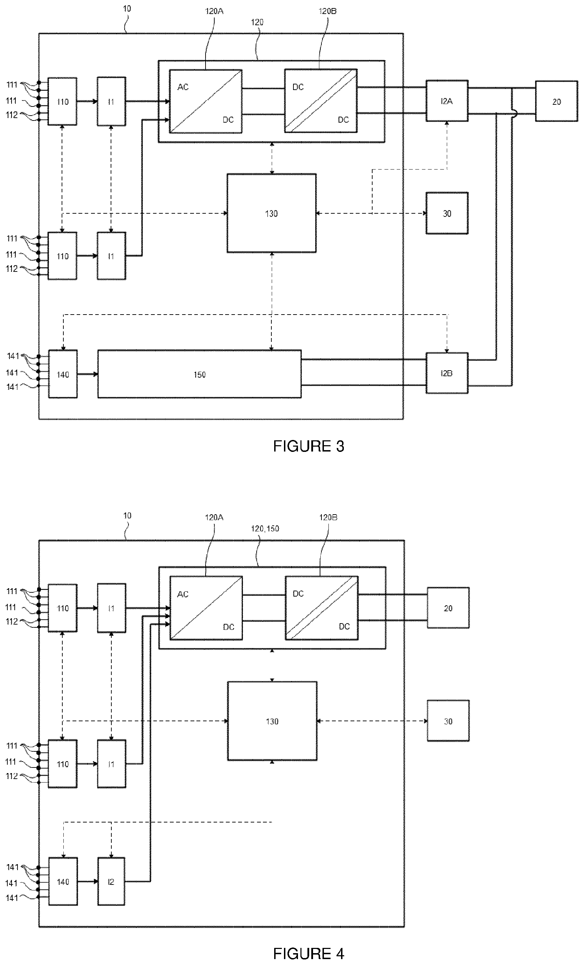

Dans cet exemple, en référence notamment aux figures 2 et 4, le module de charge haute-fréquence 120 comprend un redresseur 120A et un convertisseur élévateur 120B.

Le redresseur 120A, qui peut être passif ou actif, est apte à convertir la tension alternative, reçue sur le connecteur électrique d'entrée haute-fréquence 110 en une tension sensiblement continue mais d'amplitude non constante. Le convertisseur élévateur 120B, actif, est connecté au redresseur 120A et est apte à augmenter la valeur de la tension continue fournie par ledit redresseur 120A.

### Module de contrôle 130

Le module de contrôle 130 est apte à générer une tension de détection entre les broches de détection 112 du connecteur électrique d'entrée haute-fréquence 110 permettant à la source d'alimentation externe 2 d'autoriser la fourniture de la tension alternative aux broches d'alimentation 111 du connecteur électrique d'entrée haute-fréquence 110 comme expliqué ci-avant.

On a représenté sur les figures 3 et 4, une deuxième forme de réalisation du chargeur 10 selon l'invention.

Dans cette deuxième forme de réalisation, le chargeur 10 comprend, outre le connecteur électrique d'entrée haute-fréquence 110, le module de charge haute-fréquence 120 et le module de contrôle 130, un connecteur électrique d'entrée basse-fréquence 140 et un module de charge basse-fréquence 150.

### Connecteur électrique d'entrée basse-fréquence 140

Le connecteur électrique d'entrée basse-fréquence 140 est distinct des connecteurs électriques d'entrée haute-fréquence 110 et permet de connecter l'équipement de maintenance aéronautique 1 à une source d'alimentation externe (non représentée sur les figures 3 et 4) délivrant, via un câble électrique, une tension alternative basse-fréquence, par exemple de 50 Hz ou 60 Hz. A cette fin, le connecteur électrique d'entrée basse-fréquence 140 comporte cinq broches d'alimentation 141 : trois broches de phase, une broche de neutre et éventuellement une broche de Terre.

Par les termes « source d'alimentation externe », on entend comme précédemment aussi bien un équipement mobile tel que par exemple, un générateur d'électricité mobile ou fixe fonctionnant à partir d'un carburant fossile (gazole, essence, bioéthanol, etc.) ou d'une pile à combustible, un réseau électrique, notamment domestique, ou tout équipement apte à délivrer une tension alternative à une fréquence comprise entre 45 et 65 Hz, par exemple 50 ou 60 Hz, notamment une tension et une fréquence d'un réseau électrique domestique, par exemple 230 V et 50 Hz en monophasé ou 400 V et 50 Hz en triphasé.

### Module de charge basse-fréquence 150

Le module de charge basse-fréquence 150 est relié d'une part audit connecteur électrique d'entrée basse-fréquence 140 et d'autre part au module de stockage 20 via le module de contrôle 130 et est apte à convertir une tension alternative de fréquence comprise entre 45 à 65 Hz en une tension continue, par exemple comprise entre 200 Vdc et 400 Vdc en cas d'alimentation monophasée ou entre 300 Vdc et 900 Vdc en cas d'alimentation triphasée selon la tension du module de stockage 20 afin de fournir de l'énergie électrique au module de stockage 20 pour le recharger.

En particulier, le module de contrôle 130 est apte à connecter alternativement le module de charge haute-fréquence 120 ou le module de charge basse-fréquence 150 lorsqu'une source d'énergie électrique est connectée respectivement sur l'un des connecteurs électriques d'alimentation électrique haute-fréquence 110 ou sur le connecteur électrique d'entrée basse-fréquence 140.

Dans l'exemple illustré à la figure 3, le module de charge haute-fréquence 120 et le module de charge basse-fréquence 150 sont mis en oeuvre par deux entités physiques distinctes, c'est-à-dire qu'ils sont implémentés chacun sur un circuit électronique, les deux circuits électroniques étant indépendants électriquement.

Dans ce cas, le module de contrôle 130 peut avantageusement être apte à détecter la connexion d'une source d'alimentation externe sur l'un des connecteurs électriques d'entrée haute-fréquence 110 ou sur le connecteur électrique d'entrée basse-fréquence 140 et à connecter électriquement respectivement ledit connecteur électrique d'entrée haute-fréquence 110 au module de charge haute-fréquence 120 lorsque la connexion a été détectée sur ledit connecteur électrique d'entrée haute-fréquence 110 ou le connecteur électrique d'entrée basse-fréquence 140 au module de charge basse-fréquence 150 lorsque la connexion a été détectée sur le connecteur électrique d'entrée basse-fréquence 140. Une fois la connexion réalisée, la tension alternative est convertie en tension continue respectivement par le module de charge haute-fréquence 120 ou le module de charge basse-fréquence 150.

Dans l'exemple de la figure 4, le module de charge haute-fréquence 120 et le module de charge basse-fréquence 150 sont mis en oeuvre par une même et unique entité, c'est-à-dire un unique circuit électronique mettent en oeuvre les deux fonctions.

Dans ce cas, le module de contrôle 130 est apte à détecter une connexion sur l'un des connecteurs électriques d'entrée haute-fréquence 110 ou sur le connecteur électrique d'entrée basse-fréquence 140 et à connecter électriquement ledit connecteur électrique d'entrée haute-fréquence 110 ou le connecteur électrique d'entrée basse-fréquence 140 sur lequel la connexion a été détectée respectivement au module de charge haute-fréquence 120 ou au module de charge basse-fréquence 150. En outre, dans ce cas, le redresseur 120A et le convertisseur élévateur 120B sont en outre aptes à convertir une tension alternative 50 ou 60 Hz en une tension continue adaptée pour charger le module de stockage 20 lorsque ce dernier est connecté au chargeur 10.

Dans les formes de réalisation illustrées aux figures 2 à 4, le module de contrôle 130 est apte à contrôler un ou plusieurs contacteurs I1 triphasés 400 Hz, connectés chacun entre un connecteur électrique d'entrée haute-fréquence 110 et le module de charge haute-fréquence 120.

Dans le cas de la figure 3, le module de contrôle 130 est apte à commander en ouverture et en fermeture un contacteur I2A, placé entre le module de charge haute-fréquence 120 et le module de stockage 20, et un contacteur I2B placé entre le module de charge basse-fréquence 150 et le module de stockage 20.

Dans le cas de la figure 4, le module de contrôle 130 est apte à contrôler un contacteur I2 triphasé, connecté entre le connecteur électrique d'entrée basse-fréquence 140 et le module de charge basse-fréquence 150. Le module de contrôle 130 est notamment configuré pour contrôler les contacteurs I1 triphasés et le contacteur I2 triphasé en ouverture et en fermeture de sorte que :
- les contacteurs I1 triphasés soient fermés et le contacteur I2 triphasé soit ouvert afin d'alimenter électriquement le module de stockage 20 via le module de charge haute-fréquence 120 quand ledit module de charge haute-fréquence 120 est alimenté électriquement par une source d'alimentation externe 2 en 400 Hz via l'un des connecteurs électriques d'entrée haute-fréquence 110, ou bien
- les contacteurs I1 triphasés soient ouverts et le contacteur I2 triphasé soit fermé afin d'alimenter électriquement le module de stockage 20 via le module de charge basse-fréquence 150 quand ledit module de charge basse-fréquence 150 est alimenté électriquement par une source d'alimentation externe en 50 ou 60 Hz via le connecteur électrique d'entrée basse-fréquence 140, ou bien
- les contacteurs I1 triphasés soient ouverts et le contacteur I2 triphasé soit ouvert afin d'isoler électriquement le module de stockage 20 de l'extérieur, notamment lorsque l'équipement de maintenance aéronautique 1 n'est pas utilisé.

Le module de contrôle 130 peut être configuré pour détecter le branchement d'une source d'alimentation externe 2 sur l'un de l'au moins un connecteur électrique d'entrée haute-fréquence 110 ou sur le connecteur électrique d'entrée basse-fréquence 140 et/ou bien pour être commandé manuellement par un opérateur, par exemple via des touches, un écran tactile ou un terminal mobile, par exemple, un smartphone, afin de commuter les contacteurs I1 (et le contacteur I2 la cas échant) dans les positions souhaitées.

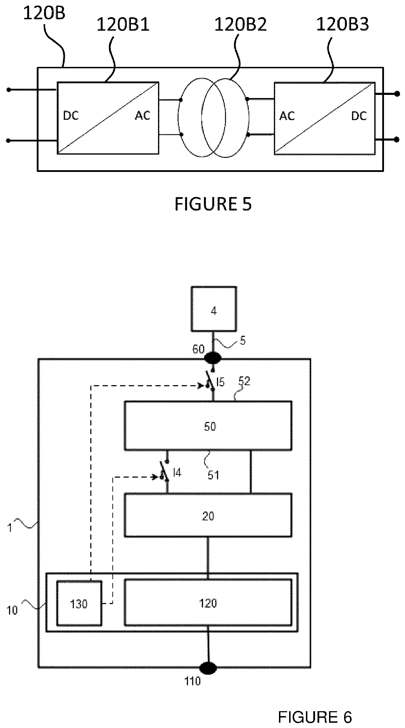

On a représenté à la figure 5 un exemple de convertisseur élévateur 120B pouvant être mis en oeuvre dans chacune des formes de réalisation des figures 2 à 4. Dans cette exemple, le convertisseur élévateur 120B comprend un étage de conversion de tension continue en tension alternative 120B1, un étage de conversion de tension alternative en tension continue 120B3 et un transformateur haute-fréquence 120B2 connecté entre l'étage de conversion de tension continue en tension alternative 120B1 et l'étage de conversion de tension alternative en tension continue 120B3. Le transformateur haute-fréquence 120B2 permet avantageusement d'adapter la tension continue de sortie du module de charge haute-fréquence 120 à la valeur souhaitée pour recharger le module de stockage 20 et d'isoler galvaniquement le module de charge haute-fréquence 120 du module de stockage 20 lorsque ces derniers sont connectés entre eux électriquement.

On notera que dans une forme de réalisation alternative (non représentée), dans le cas où le module de charge haute-fréquence 120 et le module de charge basse-fréquence 150 sont mis en oeuvre par une même entité physique, le chargeur 10 pourrait comprendre entre le contacteur I1 et le module de charge haute-fréquence/basse-fréquence 120, 150 un premier transformateur et entre le contacteur I2 et le module de charge haute-fréquence/basse-fréquence 120, 150 un deuxième transformateur. Le premier transformateur, triphasé de puissance 400 Hz et élévateur, permettrait de transformer la tension 3 x 200 V 400 Hz en une tension 3 x 400 V 400 Hz. Le deuxième transformateur, triphasé de puissance 50 Hz, permettrait d'isoler de la source d'alimentation externe 50 Hz. Ainsi le niveau de tension en entrée du redresseur 120A serait toujours le même et indépendant de la fréquence haute (400 Hz) ou basse (50 ou 60 Hz).

En référence aux figures 1 à 4 et de manière avantageuse, l'équipement de maintenance aéronautique 1 peut comprendre un module de surveillance 30, par exemple de type BMS (Battery Monitoring System), apte à envoyer une consigne de tension au module de contrôle 130 du chargeur 10 afin que le module de contrôle 130 contrôle le module de charge haute-fréquence 120 ou le module de charge basse-fréquence 150 le cas échéant afin d'ajuster sa tension de sortie à ladite consigne. A cette fin, le module de surveillance 30 et le module de contrôle 130 peuvent par exemple être reliés par un lien de communication de type bus CAN (Controller Area Network). La consigne peut par exemple être générée par le module de surveillance 30 en fonction de la tension définie aux bornes du module de stockage 20. Le module de surveillance 30 peut notamment mesurer ladite tension et déterminer une consigne permettant une charge, de préférence optimum, du module de stockage 20.

En référence de nouveau à la figure 1, l'équipement de maintenance aéronautique 1 peut aussi avantageusement comprendre un module de génération d'électricité 40 apte à produire une tension continue ou alternative basse ou haute-fréquence à partir d'un carburant fossile tel que, par exemple du gazole ou de l'essence. En variante, le module de génération d'électricité 40 pourrait comprendre une pile à combustible couplée un réservoir d'hydrogène afin de générer de l'électricité. Ce module de génération d'électricité 40, appelé « range extender », constitue un générateur d'électricité embarqué dans l'équipement de maintenance aéronautique 1. Une tension continue générée par le module de génération d'électricité 40 permet de charger directement le module de stockage 20 tandis qu'une tension alternative peut être fournie par le module de génération d'électricité 40 en entrée du module de charge haute-fréquence 120 ou du module de charge basse-fréquence 150 afin d'être convertie en tension continue pour charger le module de stockage 20.

De préférence, à un instant donné, seul l'un et seulement l'un parmi le module de charge haute-fréquence 120, le module de charge basse-fréquence 150 et le module de génération d'électricité 40 est connecté électriquement au module de stockage 20.

On a représenté à la figure 6 une forme particulière de réalisation de l'équipement de maintenance aéronautique 1 selon l'invention. Dans cette forme de réalisation, l'équipement de maintenance aéronautique 1 est de type unité de puissance au sol à batterie (Battery GPU) et comprend, outre un connecteur électrique d'entrée haute-fréquence 110, le chargeur 10 et le module de stockage 20, un onduleur 50 et un connecteur électrique de sortie 60.

### Onduleur 50

L'onduleur 50 est connecté au module de stockage 20 et est apte à convertir la tension continue fournie par ledit module de stockage 20, reçue au niveau d'une interface dite « continue » 51, en une tension alternative adaptée, fournie au niveau d'une interface dite « alternative » 52, afin d'alimenter électriquement un aéronef 4, par exemple à une tension alternative de 200 V entre phases oscillant à une fréquence de 400 Hz.

### Connecteur électrique de sortie 60

Le connecteur électrique de sortie 60 est relié à l'onduleur 50 et est relié à l'aéronef 4 via un câble électrique 5.

Dans cette forme de réalisation, l'équipement de maintenance aéronautique 1 comprend avantageusement un contacteur I4 et un contacteur I5, tous deux pouvant être commandés en ouverture ou en fermeture par le module de contrôle 130. Le contacteur I4 est connecté entre le module de stockage 20 et l'onduleur 50 pour les connecter ou les déconnecter tandis que le contacteur I5 est connecté entre l'onduleur 50 et le connecteur électrique de sortie 60 également pour les connecter ou les déconnecter.

### Exemples de mise en oeuvre

### A) Charge haute-fréquence

Dans l'exemple des figures, une source d'alimentation externe peut être connectée à un ou à l'ensemble des connecteurs électriques d'entrée haute-fréquence 110. La source d'alimentation externe (référence 2 sur la figure 1) est par exemple être un tracteur de poussée d'aéronef (pushback) équipé d'un générateur électrique haute-fréquence ou une unité de puissance au sol délivrant une tension alternative de 200 V entre phases à 400 Hz. Lorsque la source d'alimentation externe 2 est branchée sur le connecteur électrique d'entrée haute-fréquence 110, le module de contrôle 130 détecte ce branchement et positionne, le ou les contacteurs I1 en fermeture. En variante, un opérateur pourrait commander le module de contrôle 130 pour que ledit module de contrôle 130 commute le ou les contacteurs I1 en fermeture avant de brancher la source d'alimentation externe 2 sur le ou les connecteurs électriques d'entrée haute-fréquence 110. Une fois connecté, le module de charge haute-fréquence 120 convertit la tension alternative 400 Hz délivrée par la source d'alimentation externe 2 en une tension continue permettant d'alimenter électriquement le module de stockage 20 afin de le recharger en énergie électrique. Une fois la charge suffisante, la source d'alimentation externe 2 est déconnectée de l'équipement de maintenance aéronautique 1 qui peut alors être utilisé pour remplir sa fonction d'origine.

### B) Charge basse-fréquence

Dans l'exemple des figures 3 ou 4, l'équipement de maintenance aéronautique 1 est connecté à une source d'alimentation externe 2 basse-fréquence qui peut par exemple être dans ce cas un groupe électrogène à moteur thermique ou à moteur électrique ou une alimentation sous avion fixe ou mobile délivrant une tension alternative de 230 V à 50 Hz en monophasé ou de 400 V à 50 Hz en triphasé. Lorsque la source d'alimentation externe 2 est branchée sur le connecteur électrique d'entrée basse-fréquence 140, le module de contrôle 130 détecte ce branchement et positionne :
- dans le cas de la figure 3, le module de contrôle 130 place le contacteur I2A en ouverture et le contacteur I2B en fermeture. En variante, un opérateur peut commander le module de contrôle 130 pour que ledit module de contrôle 130 commute le contacteur I2A en ouverture et le contacteur I2B en fermeture avant de brancher la source d'alimentation externe sur le connecteur électrique d'entrée basse-fréquence 140,
- dans le cas de la figure 4, le module de contrôle 130 place le contacteur I1 en ouverture et le contacteur I2 en fermeture. En variante, un opérateur peut commander le module de contrôle 130 pour que ledit module de contrôle 130 commute le contacteur I1 en ouverture et le contacteur I2 en fermeture avant de brancher la source d'alimentation externe sur le connecteur électrique d'entrée basse- fréquence 140.

Une fois connecté, le module de charge basse-fréquence 150 convertit la tension alternative 50 ou 60 Hz délivrée par la source d'alimentation externe sur le connecteur électrique d'entrée basse- fréquence 140 en une tension continue permettant d'alimenter électriquement le module de stockage 20 afin de le recharger en énergie électrique. Une fois la charge suffisante, la source d'alimentation externe est déconnectée de l'équipement de maintenance aéronautique 1 qui peut alors être utilisé pour remplir sa fonction d'origine.

### C) Fourniture d'énergie

Dans le cas où l'équipement de maintenance aéronautique 1 est une unité de puissance au sol (figure 6), une fois connecté à l'aéronef 4, le module de contrôle 130 commute les contacteurs I4 et I5 en fermeture si nécessaire (c'est-à-dire s'ils ne l'étaient pas) de sorte que le module de stockage 20 fournisse une tension continue sur l'interface continue 51 de l'onduleur 50. L'onduleur 50 convertit cette tension en une tension alternative, par exemple de 200 V entre phases à 400 Hz, sur l'interface alternative 52, cette tension alternative permettant alors d'alimenter électriquement l'aéronef 4 via le connecteur électrique de sortie 60 et le câble électrique 5.

### D) Rechargement autonome (« range extender »)

Lorsqu'il est nécessaire de recharger le module de stockage 20 mais qu'aucune source d'alimentation externe 2 n'est disponible, un opérateur peut commander le module de contrôle 130 afin qu'il actionne le module de génération d'électricité 40 s'il est présent (figure 1) pour qu'il produise une tension continue ou alternative basse ou haute-fréquence en brulant du carburant ou via une pile à combustible par recharge en dihydrogène. Une fois la recharge suffisante, le module de contrôle 130 déconnecte ou commande l'arrêt du module de génération d'électricité 40 du module de stockage 20. L'équipement de maintenance aéronautique 1 peut alors être utilisé.

Le chargeur 10 selon l'invention permet donc avantageusement d'utiliser une tension alternative 400 Hz pour charger une batterie d'un équipement de maintenance aéronautique 1. La charge peut avantageusement être ultra-rapide en utilisant une pluralité de connecteurs électriques d'entrée haute-fréquence 110 connectés simultanément à une pluralité de sources d'alimentation externe 2. Lorsque le chargeur 10 comporte au moins un connecteur électrique d'entrée basse-fréquence 140, la charge peut être réalisée aussi bien à partir d'une source d'alimentation externe 2 délivrant une tension en 400 Hz que d'une source d'alimentation externe délivrant une tension en 50 ou 60 Hz, ce qui multiplie le nombre de sources utilisables dans les zones aéronautiques pour recharger les batteries des équipements de maintenance aéronautique 1. L'équipement de maintenance aéronautique 1 selon l'invention permet avantageusement d'utiliser la plupart des sources d'alimentation externe 2 présentes dans les zones aéroportuaires.

## Revendications

1. Chargeur (10) pour équipement de maintenance aéronautique (1), ledit chargeur (10) comprenant :
- au moins un connecteur électrique d'entrée dit « haute-fréquence » (110) comprenant une pluralité de broches d'alimentation (111) configuré pour recevoir une tension alternative triphasée délivrée par une source d'alimentation externe (2) à une fréquence de 400 Hz, et deux broches de détection (112),
- un module de charge dit « haute-fréquence » (120), relié audit au moins un connecteur électrique d'entrée haute-fréquence (110) et destiné à être relié à un module de stockage (20) d'énergie électrique dudit équipement de maintenance aéronautique (1), ledit module de charge haute-fréquence (120) étant configuré pour convertir la tension alternative reçue sur la pluralité de broches d'alimentation (111) du connecteur électrique d'entrée haute-fréquence (110) en une tension continue permettant de charger ledit module de stockage (20),
- un module de contrôle (130) configuré pour générer une tension de détection entre les broches de détection (112) du connecteur électrique d'entrée haute-fréquence (110) permettant à la source d'alimentation externe (2), lorsqu'elle détecte ladite tension de détection, d'autoriser la fourniture de la tension alternative à la pluralité de broches d'alimentation (111) du connecteur électrique d'entrée haute-fréquence (110).

2. Chargeur (10) selon la revendication 1, dans lequel le module de contrôle (130) est configuré pour recevoir une consigne d'un module de surveillance (30) du module de stockage (20) et à réguler la tension continue fournie par le module de charge haute-fréquence (120) en fonction de ladite consigne.

3. Chargeur (10) selon l'une des revendications précédentes, comprenant une pluralité de connecteurs électriques d'entrée haute-fréquence (110).

4. Chargeur (10) selon l'une des revendications précédentes, dans lequel le module de charge haute-fréquence (120) comprend un redresseur (120A) et convertisseur élévateur (120B).

5. Chargeur (10) selon l'une des revendications précédentes, comprenant :
- au moins un connecteur électrique d'entrée dit « basse-fréquence » (140) distinct de l'au moins un connecteur électrique d'entrée haute-fréquence (110) et configuré pour recevoir une tension alternative monophasée ou triphasée délivrée par une source d'alimentation externe (2) à une fréquence comprise entre 45 et 65 Hz,
- un module de charge dit « basse-fréquence » (150), relié d'une part audit au moins un connecteur électrique d'entrée basse-fréquence (140) et destiné à être relié au module de stockage (20), ledit module de charge basse-fréquence (150) étant configuré pour convertir la tension alternative reçue sur l'au moins un connecteur électrique d'entrée basse-fréquence (140) en une tension continue permettant de charger le module de stockage (20).

6. Chargeur (10) selon la revendication précédente, dans lequel le module de charge basse-fréquence (150) et le module de charge haute-fréquence (120) sont mis en oeuvre par une même entité physique dans un unique module de charge basse-fréquence ou haute-fréquence (120/150).

7. Chargeur (10) selon la revendication précédente, dans lequel le module de contrôle (130) est configuré pour détecter la connexion d'une source d'alimentation externe (2) sur l'au moins un connecteur électrique d'entrée haute-fréquence (110) ou sur l'au moins un connecteur électrique d'entrée basse-fréquence (140) et à adapter le fonctionnement du module de charge basse-fréquence ou haute-fréquence (120/150) en fonction de la fréquence de la tension alternative fournie sur le connecteur électrique d'entrée (110, 140) détecté.

8. Chargeur (10) selon la revendication 5, dans lequel le module de charge basse-fréquence (150) et le module de charge haute-fréquence (120) sont mis en oeuvre par deux entités physiques distinctes.

9. Chargeur (10) selon la revendication précédente, dans lequel le module de contrôle (130) est configuré pour détecter la connexion d'une source d'alimentation externe (2) sur l'au moins un connecteur électrique d'entrée haute-fréquence (110) ou basse-fréquence (140) et à connecter électriquement l'au moins un connecteur électrique d'entrée basse-fréquence (140) au module de charge basse-fréquence (150) lorsque la connexion a été détectée sur l'au moins connecteur électrique d'entrée basse-fréquence (140) ou l'au moins connecteur électrique d'entrée haute-fréquence (110) au module de charge haute-fréquence (120) lorsque la connexion a été détectée sur l'au moins un connecteur électrique d'entrée haute-fréquence (110).

10. Chargeur (10) selon l'une des revendications précédentes, dans lequel le module de contrôle (130) est configuré pour déterminer ou à recevoir une information sur la puissance de charge de la source d'alimentation externe (2) et à adapter l'intensité du courant de charge du module de stockage (20) en fonction de ladite information de puissance de charge.

11. Equipement de maintenance aéronautique (1) destiné à être utilisé dans une zone aéronautique, ledit équipement de maintenance aéronautique (1) comprenant :
- un chargeur (10) selon l'une des revendications précédentes,
- un module de stockage (20), connecté audit chargeur (10), configuré pour stocker de l'énergie électrique lorsque ledit module de stockage (20) est alimenté par une tension continue délivrée par ledit chargeur (10).

12. Equipement de maintenance aéronautique (1) selon la revendication précédente, comprenant un module de génération d'électricité (40), connecté au module de stockage (20), configuré pour produire une tension continue ou alternative haute-fréquence ou basse-fréquence à partir d'un carburant ou d'une pile à combustible afin de recharger le module de stockage (20).

13. Système comprenant un équipement de maintenance aéronautique (1), selon l'une quelconque des revendication 11 et 12, et une source d'alimentation externe (2), connectée électriquement audit équipement de maintenance aéronautique (1), ladite source d'alimentation externe (2) étant configuré pour délivrer une tension alternative monophasée ou triphasée en 50 ou en 60 Hz ou bien triphasée en 400 Hz, afin de charger le module de stockage (20) de l'équipement de maintenance aéronautique (1) via le chargeur (10) dudit équipement de maintenance aéronautique (1).

14. Procédé de charge d'un module de stockage (20) d'énergie électrique d'un équipement de maintenance aéronautique (1), selon l'une quelconque des revendication 11 et 12, par une source d'alimentation externe (2) configuré pour délivrer une tension alternative triphasée délivrée à une fréquence de 400 Hz, ledit procédé comprenant les étapes de :
- connexion électrique de la source d'alimentation externe (2) à l'au moins un connecteur électrique d'entrée haute-fréquence (110) du chargeur (1) de l'équipement de maintenance aéronautique (1) de sorte à délivrer une tension alternative triphasée à une fréquence de 400 Hz,
- conversion, par le module de charge haute-fréquence (120) du chargeur (10) de l'équipement de maintenance aéronautique (1), de ladite tension alternative en une tension continue,
- charge du module de stockage (20) de l'équipement de maintenance aéronautique (1) à partir de ladite tension continue.

## Patentansprüche

1. Ladegerät (10) für aeronautische Wartungseinrichtung (1), wobei das Ladegerät (10) umfasst:
- mindestens einen elektrischen als "Hochfrequenz" bezeichneten Eingangsverbinder (110), umfassend eine Vielzahl von Versorgungsstiften (111), der dazu ausgelegt ist, eine Dreiphasen-Wechselspannung zu empfangen, die von einer externen Versorgungsquelle (2) mit einer Frequenz von 400 Hz bereitgestellt wird, und zwei Detektionsstifte (112),
- ein als "Hochfrequenz" bezeichnetes Lademodul (120), das mit dem mindestens einen elektrischen Hochfrequenz-Eingangsverbinder (110) verbunden ist und bestimmt, mit einem Elektroenergie-Speichermodul (20) der aeronautischen Wartungseinrichtung (1) verbunden zu sein, wobei das Hochfrequenz-Lademodul (120) dazu ausgelegt ist, die über die Vielzahl von Versorgungsstiften (111) des elektrischen Hochfrequenz-Eingangsverbinders (110) empfangene Wechselspannung in eine Gleichspannung umzuwandeln, die erlaubt, das Speichermodul (20) zu laden,
- ein Steuermodul (130), das dazu ausgelegt ist, eine Detektionsspannung zwischen den Detektionsstiften (112) des elektrischen Hochfrequenz-Eingangsverbinders (110) zu erzeugen, was der externen Versorgungsquelle (2) erlaubt, wenn sie die Detektionsspannung ermittelt, die Lieferung der Wechselspannung an die Vielzahl von Versorgungsstiften (111) des elektrischen Hochfrequenz-Eingangsverbinders (110) zu gestatten.

2. Ladegerät (10) nach Anspruch 1, wobei das Steuermodul (130) dazu ausgelegt ist, einen Sollwert von einem Überwachungsmodul (30) des Speichermoduls (20) zu empfangen und die von dem Hochfrequenz-Lademodul (120) gelieferte Gleichspannung in Abhängigkeit von dem Sollwert zu regeln.

3. Ladegerät (10) nach einem der vorangehenden Ansprüche, umfassend eine Vielzahl von elektrischen Hochfrequenz-Eingangsverbindern (110).

4. Ladegerät (10) nach einem der vorangehenden Ansprüche, wobei das Hochfrequenz-Lademodul (120) einen Gleichrichter (120A) und einen Spannungsumsetzer (120B) umfasst.

5. Ladegerät (10) nach einem der vorangehenden Ansprüche, umfassend:
- mindestens einen als "Niederfrequenz" bezeichneten elektrischen Eingangsverbinder (140), der sich von dem mindestens einen elektrischen Hochfrequenz-Eingangsverbinder (110) unterscheidet und dazu ausgelegt ist, eine Einphasen- oder Dreiphasen-Wechselspannung zu empfangen, die von einer externen Versorgungsquelle (2) in einer Frequenz bereitgestellt wird, die zwischen 45 und 65 Hz liegt,
- ein als "Niederfrequenz" bezeichnetes Lademodul (150), das zum einen mit dem mindestens einen elektrischen Niederfrequenz-Eingangsverbinder (140) verbunden ist und bestimmt, mit dem Speichermodul (20) verbunden zu sein, wobei das Niederfrequenz-Lademodul (150) dazu ausgelegt ist, die über den einen elektrischen Niederfrequenz-Eingangsverbinder (140) empfangene Wechselspannung in eine Gleichspannung umzuwandeln, die erlaubt, das Speichermodul (20) zu laden.

6. Ladegerät (10) nach vorangehendem Anspruch, wobei das Niederfrequenz-Lademodul (150) und das Hochfrequenz-Lademodul (120) von derselben physikalischen Einheit in einem einzigen Niederfrequenz- oder Hochfrequenz-Lademodul (120/150) umgesetzt werden.

7. Ladegerät (10) nach vorangehendem Anspruch, wobei das Steuermodul (130) dazu ausgelegt ist, die Verbindung einer externen Versorgungsquelle (2) über den mindestens einen elektrischen Hochfrequenz-Eingangsverbinder (110) oder über den mindestens einen elektrischen Niederfrequenz-Eingangsverbinder (140) zu ermitteln und den Betrieb des Niederfrequenz- oder Hochfrequenz-Lademoduls (120/150) in Abhängigkeit von der Frequenz der über den ermittelten elektrischen Eingangsverbinder (110, 140) gelieferten Wechselspannung anzupassen.

8. Ladegerät (10) nach Anspruch 5, wobei das Niederfrequenz-Lademodul (150) und das Hochfrequenz-Lademodul (120) von zwei verschiedenen physikalischen Einheiten umgesetzt werden.

9. Ladegerät (10) nach vorangehendem Anspruch, wobei das Steuermodul (130) dazu ausgelegt ist, die Verbindung einer externen Versorgungsquelle (2) über den mindestens einen elektrischen Hochfrequenz-(110) oder Niederfrequenz-Eingangsverbinder (140) zu ermitteln und den mindestens einen elektrischen Niederfrequenz-Eingangsverbinder (140) mit dem Niederfrequenz-Lademodul (150), wenn die Verbindung über den mindestens einen elektrischen Niederfrequenz-Eingangsverbinder (140) ermittelt wurde oder den mindestens einen elektrischen Hochfrequenz-Eingangsverbinder (110) mit dem Hochfrequenz-Lademodul (120), wenn die Verbindung über den mindestens einen elektrischen Hochfrequenz-Eingangsverbinder (110) ermittelt wurde, elektrisch zu verbinden.

10. Ladegerät (10) nach einem der vorangehenden Ansprüche, wobei das Steuermodul (130) dazu ausgelegt ist, eine Information über die Ladeleistung der externen Versorgungsquelle (2) zu bestimmen oder zu empfangen und die Stärke des Ladestroms des Speichermoduls (20) in Abhängigkeit von der Ladestrominformation anzupassen.

11. Aeronautische Wartungseinrichtung (1), die zur Verwendung in einem aeronautischen Bereich bestimmt ist, wobei die aeronautische Wartungseinrichtung (1) umfasst:
- ein Ladegerät (10) nach einem der vorangehenden Ansprüche,
- ein mit dem Ladegerät (10) verbundenes Speichermodul (20), das dazu ausgelegt ist, elektrische Energie zu speichern, wenn das Speichermodul (20) von einer Gleichspannung versorgt wird, die von dem Ladegerät (10) bereitgestellt wird.

12. Aeronautische Wartungseinrichtung (1) nach vorangehendem Anspruch, umfassend ein Stromerzeugungsmodul (40), das mit dem Speichermodul (20) verbunden ist, das dazu ausgelegt ist, eine Hochfrequenz- oder Niederfrequenz-Gleich- oder Wechselspannung ausgehend von einem Kraftstoff oder einer Brennstoffzelle zu erzeugen, um das Speichermodul (20) aufzuladen.

13. System, umfassend eine aeronautische Wartungseinrichtung (1) nach einem der Ansprüche 11 und 12 und eine externe Versorgungsquelle (2), die mit der aeronautische Wartungseinrichtung (1) elektrisch verbunden ist, wobei die externe Versorgungsquelle (2) dazu ausgelegt ist, eine 50 oder 60-Hz-Einphasen- oder Dreiphasen- oder 400-Hz-Dreiphasen-Wechselspannung bereitzustellen, um das Speichermodul (20) der aeronautischen Wartungseinrichtung (1) über das Ladegerät (10) der aeronautischen Wartungseinrichtung (1) zu laden.

14. Verfahren zum Laden eines Elektroenergie-Speichermoduls (20) einer aeronautischen Wartungseinrichtung (1) nach einem der Ansprüche 11 und 12 durch eine externe Versorgungsquelle (2), die dazu ausgelegt ist, eine Dreiphasen-Wechselspannung bereitzustellen, die in einer Frequenz von 400 Hz bereitgestellt wird, wobei das Verfahren die folgenden Schritte umfasst:
- elektrisches Verbinden der externen Versorgungsquelle (2) mit dem mindestens einen elektrischen Hochfrequenz-Eingangsverbinder (110) des Ladegeräts (1) der aeronautischen Wartungseinrichtung (1) derart, dass eine Dreiphasen-Wechselspannung in einer Frequenz von 400 Hz bereitgestellt wird,
- Umwandeln, durch das Hochfrequenz-Lademodul (120) des Ladegeräts (10) der aeronautischen Wartungseinrichtung (1), der Wechselspannung in eine Gleichspannung,
- Laden des Speichermoduls (20) der aeronautischen Wartungseinrichtung (1) ausgehend von der Gleichspannung.

## Claims

1. A charger (10) for aeronautical maintenance equipment (1), said charger (10) comprising:
- at least one so-called "high-frequency" input electrical connector (110) comprising a plurality of power pins (111) configured to receive a three-phase alternating voltage delivered by an external power supply source (2) at a frequency of 400 Hz, and two detection pins (112),
- a so-called "high-frequency" charging module (120), connected to said at least one high-frequency input electrical connector (110) and intended to be connected to an electrical energy storage module (20) of said aeronautical maintenance equipment (1), said high-frequency charging module (120) being configured to convert the alternating voltage received on the plurality of power pins (111) of the high-frequency input electrical connector (110) in a direct voltage allowing said storage module (20) to be charged,
- a control module (130) configured to generate a detection voltage between the detection pins (112) of the high-frequency input electrical connector (110) allowing the external power supply source (2), when the latter detects said detection voltage, to authorise provision of the alternating voltage to the plurality of power pins (111) of the high-frequency input electrical connector (110).

2. The charger (10) according to claim 1, wherein the control module (130) is configured to receive a set point from a monitoring module (30) of the storage module (20) and to regulate the direct voltage provided by the high-frequency charging module (120) as a function of said set point.

3. The charger (10) according to any of the preceding claims, comprising a plurality of high-frequency input electrical connectors (110).

4. The charger (10) according to any of the preceding claims, wherein the high-frequency charging module (120) comprises a rectifier (120A) and a boost converter (120B).

5. The charger (10) according to any of the preceding claims, comprising:
- at least one so-called "low-frequency" input electrical connector (140) distinct from the at least one high-frequency input electrical connector (110) and configured to receive a single-phase or three-phase alternating voltage delivered by an external power supply source (2) at a frequency between 45 and 65 Hz,
- a so-called "low-frequency" charging module (150), connected on the one hand to said at least one low-frequency input electrical connector (140) and intended to be connected to the storage module (20), said low-frequency charging module (150) being configured to convert the alternating voltage received on the at least one low-frequency input electrical connector (140) into a direct voltage allowing the storage module (20) to be charged.

6. The charger (10) according to the preceding claim, wherein the low-frequency charging module (150) and the high-frequency charging module (120) are implemented by a same physical entity in a single low-frequency or high-frequency charging module (120/150).

7. The charger (10) according to the preceding claim, wherein the control module (130) is configured to detect the connection of an external power supply source (2) to the at least one high-frequency input electrical connector (110) or to the at least one low-frequency input electrical connector (140) and to adapt operation of the low-frequency or high-frequency charging module (120/150) as a function of the frequency of the alternating voltage provided to the input electrical connector (110, 140) detected.

8. The charger (10) according to claim 5, wherein the low-frequency charging module (150) and the high-frequency charging module (120) are implemented by two distinct physical entities.

9. The charger (10) according to the preceding claim, wherein the control module (130) is configured to detect the connection of an external power supply source (2) to the at least one high-frequency (110) or low-frequency (140) input electrical connector and to electrically connect the at least one low-frequency input electrical connector (140) to the low-frequency charging module (150) when the connection has been detected to the at least one low-frequency input electrical connector (140) or the at least one high-frequency input electrical connector (110) to the high-frequency charging module (120) when the connection has been detected to the at least one high-frequency input electrical connector (110).

10. The charger (10) according to any of the preceding claims, wherein the control module (130) is configured to determine or receive information about the charging power of the external power supply source (2) and to adapt intensity of the charging current of the storage module (20) as a function of said charging power information.

11. An aeronautical maintenance equipment (1) intended to be used in an aeronautical zone, said aeronautical maintenance equipment (1) comprising:
- a charger (10) according to one of the preceding claims,
- a storage module (20), connected to said charger (10), configured to store electrical energy when said storage module (20) is supplied by a direct voltage delivered by said charger (10).

12. The aeronautical maintenance equipment (1) according to the preceding claim, comprising an electric power generation module (40), connected to the storage module (20), configured to be capable of producing a high-frequency or low-frequency direct or alternating voltage from a fuel or a fuel cell in order to recharge the storage module (20).

13. A system comprising aeronautical maintenance equipment (1), according to any of claims 11 to 12, and an external power supply source (2), electrically connected to said aeronautical maintenance equipment (1), said external power supply source (2) being configured to deliver a single-phase or three-phase alternating voltage in 50 or 60 Hz or three-phase in 400 Hz, in order to charge the storage module (20) of the aeronautical maintenance equipment (1) via the charger (10) of said aeronautical maintenance equipment (1).

14. A method for charging an electrical energy storage module (20) of an aeronautical maintenance equipment (1), according to any of claims 11 to 12, by an external power supply source (2) configured to deliver a three-phase alternating voltage delivered at a frequency of 400 Hz, said method comprising the steps of:
- electrically connecting the external power supply source (2) to the at least one high-frequency input electrical connector (110) of the charger (1) of the aeronautical maintenance equipment (1) so as to deliver a three-phase alternating voltage at a frequency of 400 Hz,
- converting, by the high-frequency charging module (120) of the charger (10) of the aeronautical maintenance equipment (1), said alternating voltage into a direct voltage,
- charging the storage module (20) of the aeronautical maintenance equipment (1) from said direct voltage.
